# EUROPEAN PATENT SPECIFICATION

(11) **EP 1 819 572 B1**
(45) Date of publication and mention of the grant of the patent: **17.08.2011**
(21) Application number: 05791320.4
(22) Date of filing: 12.10.2005
(51) Int. Cl.: B62B 5/06

(54) **WHEELBARROW**
SCHUBKARRE
BROUETTE

(30) Priority: 14.10.2004 GB 0422821; 01.11.2004 GB 0424081; 25.01.2005 GB 0501501
(43) Date of publication of application: 22.08.2007
(73) Proprietor: Alner, David Lee, Fleet, Hants GU51 3DF (GB); Blanchette, Paul John, Fleet, Hants GU51 1HF (GB)
(72) Inventor: Alner, David Lee, Fleet, Hants GU51 3DF (GB); Blanchette, Paul John, Fleet, Hants GU51 1HF (GB)
(74) Representative: Harrison, Paul Richard
(86) International application number: PCT/GB2005/003919
(87) International publication number: WO 2006/040547

(56) References cited:
- GB-A- 2 359 788
- US-A- 4 951 956
- US-A- 5 799 960
- US-A- 6 098 492
- US-A- 6 125 512

## Description

The present invention relates to wheelbarrows and the like.

A wheelbarrow consists in essence of an open hopper with a wheel at the front and, at the rear, a pair of supports projecting downwards and a pair of handles projecting backwards. The handles and supports are usually formed from a single long and suitably bent length of tubing which is also bent in a tight U shape at the front to form a mounting fork for the wheel. (Obviously there are many variations and developments of this basic arrangement; for example, some barrows have two wheels at the front, giving greater stability.)

The hopper can be loaded with a wide variety of materials. Such loading is usually done either manually, if the material is in suitably sized pieces for handling, or with the aid of a shovel, if the material is in small pieces, sandy, etc. Unloading can be done manually or with the aid of a shovel as appropriate. However, the barrow can also often be unloaded by tipping the barrow, either sideways or by raising the back end.

Unloading by tipping can be awkward, particularly if the unloading is forwards by raising the back end. This requires the changing of the user's grasp on the handles, from a lifting-from-above position to a pushing-from-below position. During this raising, the barrow is resting primarily on the front wheel, and it is also necessary to prevent it from moving forwards or backwards.

There have been various proposals for the provision of a pair of grip units one on the end of each of the handles, the grip units being hinged or otherwise rotatable so that the user does not have to change their grasp of the grip units when raising the barrow to tip out its load.

One such proposal is US 4 951 956, Vittone, in which each grip unit is in the form of a ring mounted with two pivots, one each side, to pivot about an axis transverse to the barrow handles, and with a holding bar fixed perpendicularly to the pivoting axis. Drawbacks to this design are the mechanical complexity and the awkwardness of grasping the holding bar.

Another such proposal is US 5 799 960, Davis, in which each grip unit comprises a bar mounted to project horizontally inwards at right angles to the end of the handle, and carrying a rotating sleeve. A drawback to this design is that the user has to hold their hands in an unusual and awkward position, similar to that used in pushing an old-fashioned pram. The user thus pushes the barrow in front of them rather than lifting it at their sides.

A further such proposal is US 6 125 512, Weber, in which each grip unit forms an extension to the end of the handle and is in line therewith. The grip unit can rotate between an upwards position in line with the handle and a downwards position at an angle to the handle. A drawback to this design is that when the barrow is being lifted for tipping, the weight of the barrow is exerted on the forward ends of the grip units. The user therefore has to exert a torsional force on the grip units to maintain them at an angle to the line of the handles, resulting on a strain on the wrists.

GB 2 359 788 A shows a wheelbarrow according to the preamble of claim 1.

As a result of the disadvantages and difficulties of these various proposals, none of them has achieved any significant commercial success.

The object of the invention is to provide an improved barrow which is more easily controlled during forward tipping. This object is solved by a wheelbarrow or the like according to claim 1 and by a grip unit according to claim 5.

Accordingly there is provided a wheelbarrow or the like having a pair of grip units each capable of twisting about a generally transverse axis, each grip unit being in the form of a bar or strut projecting transversely from its handle and having a holding bar mounted transversely on its other end. The strut is essentially cylindrical, passing through the handle and has a screw thread at that end whereby it is secured to the handle, and with a head at its other end which is captive within the holding bar. Preferably the holding bar is a 2-part moulding of plastics or like material. Optionally, the grip units may also be slightly twistable about the longitudinal axis.

The wheelbarrow is preferably provided with the grip units as integral parts of the barrow. However, the grip units may also be provided as an add-on for retro-fitting to an existing standard wheelbarrow or the like.

Some embodiments will now be described by way of example and with reference to the drawings, in which:
Fig. 1 shows a standard wheelbarrow in simplified form;
Fig. 2 shows a grip unit in simplified form;
Figs. 3 and 4 show a preferred form of grip unit in simplified form and in detail; and
Figs. 5-7 show a modified attachment between a grip unit and the handle, that is not part of the present invention as defined by claim 1.

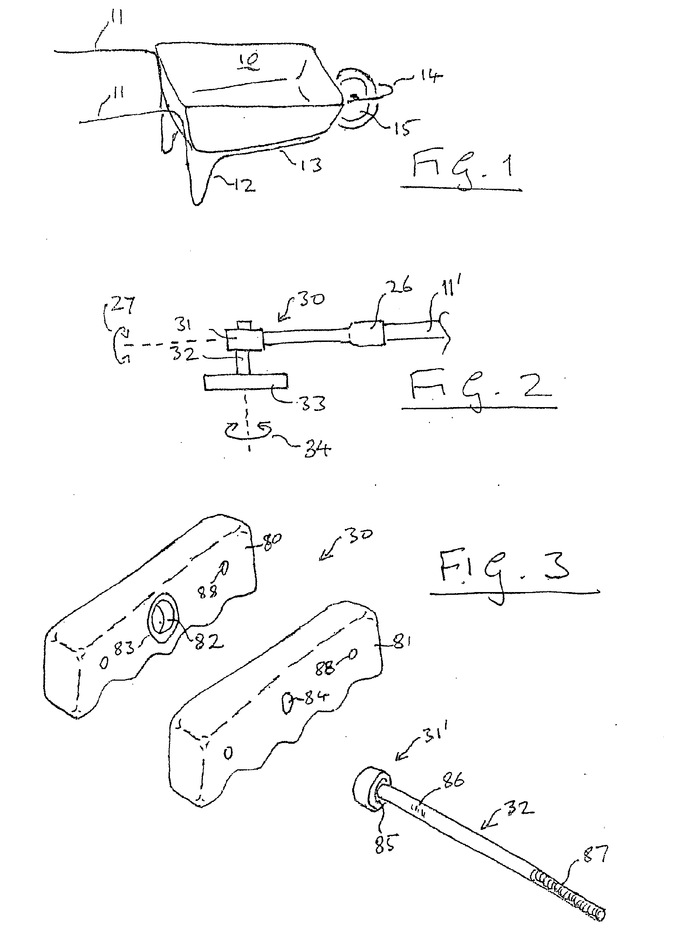

Fig. 1 shows the basic principles of a standard (conventional) wheelbarrow. The barrow has a hopper 10, which is mounted on a frame element in the form of a suitably shaped tube, different portions of which form a pair of handles 11, a pair of feet 12, a hopper support 13, and a front fork 14. A wheel 15 is mounted in the front fork 14.

In use, the user holds the barrow with a hand on each handle 11. For normal use, ie pushing the barrow about, each hand is placed with the palm facing inwards and the fingers curling under the handle. To tip the contents of the barrow out over the front wheel, the barrow is raised to a roughly vertical position. To hold the barrow in that position, the hands are rotated so that the fingers are curled over the tops of the handles (with the palms remaining on the outsides of the handles). This requires a change-over of the grasp, with the palms and the balls of the thumbs supporting the weight of the barrow during the change-over. There is a risk that the user may lose control of the barrow during this process, with the barrow and/or its contents falling into undesired, awkward, or dangerous positions. There is also a risk that the user may injure their hand as a result.

In the present invention, the simple handles 11 are modified by the addition of grip units which allow the user to raise the barrow without having to perform such a change of grasp.

Fig. 2 is a top view of a preferred form of grip unit 30. The end or handle shaft 11' of the frame element, which would normally form the handle, has a bearing 31 attached to its end, with a strut or shaft 32 projecting horizontally outwards from it. A holding bar 33 is attached rigidly to the end of the shaft 32. The holding bar may have finger corrugations on its under side (not visible in the drawing).

In use, the user grasps the holding bars of the grip units. To raise the barrow, the user has to raise the grip units, but maintains the same grasp, with the holding bars rotating to remain generally horizontal as the barrow is raised and the handle shafts 11' rotate from roughly horizontal towards the vertical.

If desired, the grip unit may instead be attached to the handle shaft 11' by a mounting 26 which allows slight rotation of the grip unit as indicated by the arrow 27. The mounting 26 preferably includes resilient means which resist and limit such rotation. Such rotation about a longitudinal axis (ie an axis roughly aligned with the handle shaft 11') allows slight shifting of the user's grasp as the barrow is lifted, and further eases the task of lifting.

The axis of rotation of the holding bar is roughly transverse, ie in the crosswise direction between the handle shafts. The axis passes through the holding bar 24 near its centre, so that the user's fingers are positioned two in front of the axis and two behind. The user therefore experiences only a simple downward force from the barrow.

Fig. 3 shows a development and slight modification of the Fig. 2 arrangement in simplified diagrammatic form. In this, the bearing 31' is trapped and located in the holding bar 30. More specifically, the holding bar 30 is formed in two parts or halves 80 and 81 which can be bolted together by bolts (not shown) through the holes 88. Shaft 32 has the bearing assembly 31' mounted on its outer end; its inner end is threaded, as indicated 87, so that it can be mounted in a hole in the barrow handle by suitable nuts (not shown). (Obviously other attachment means can be used.) The shaft 32 may have flats 86 to enable it to be held for attachment to the barrow handle.

Holding bar half 80 has a blind hole 82 to receive the bearing assembly 31'; if desired, the bearing assembly may be a press fit in the hole. Holding bar half 81 has a through hole 84 through which the shaft 32 passes. The two holding bar halves are bolted or otherwise attached together with the bearing assembly in holding bar half 80 and the shaft passing through the holding bar half 81. Sealing O rings may be provided if desired, eg as shown at 83 and 85. The shaft 32 is threaded along part of its length 87, the remainder 86 being unthreaded.

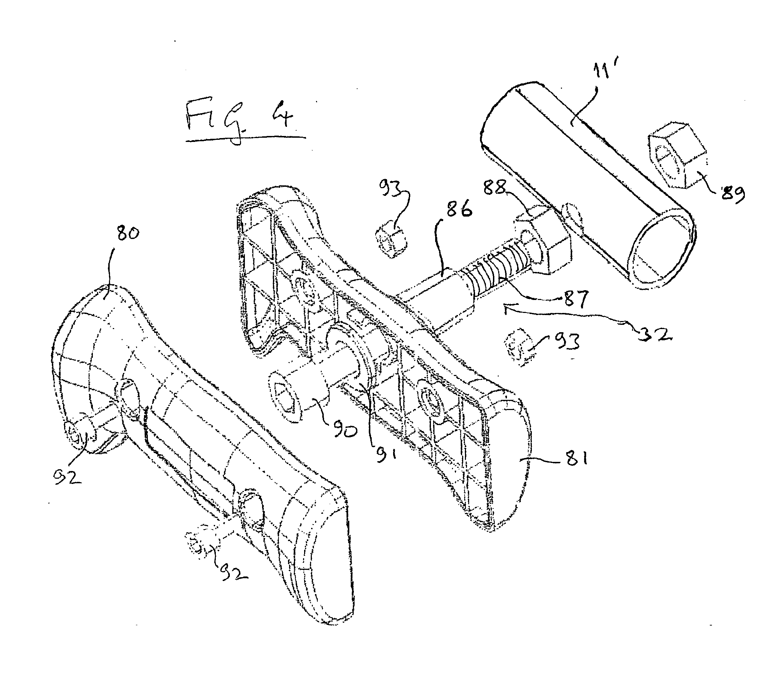

Fig. 4 shows the Fig. 3 arrangement in more detail. The shaft 32 is held onto the handle 11' by two nuts 88 and 89, nut 88 being turned on the shaft 32 until it reaches the end of thew threaded portion 87. The bearing is formed by a simple head 90 on the end of the shaft 32, fitting in the socket 82 in the holding bar half 80, together with the end of the smooth part 86 of the shaft 32 engaging in the hole 84 in the holding bar half 81. A washer 91 is positioned over the shaft 32 against the head 90 as shown. The two holding bar halves 80 and 81 are bolted together by bolts 92 and nuts 93.

The grip means as shown so far all form part of the barrow. However, the grip means may form a separate pair of items which can be attached to the handles of an existing barrow.

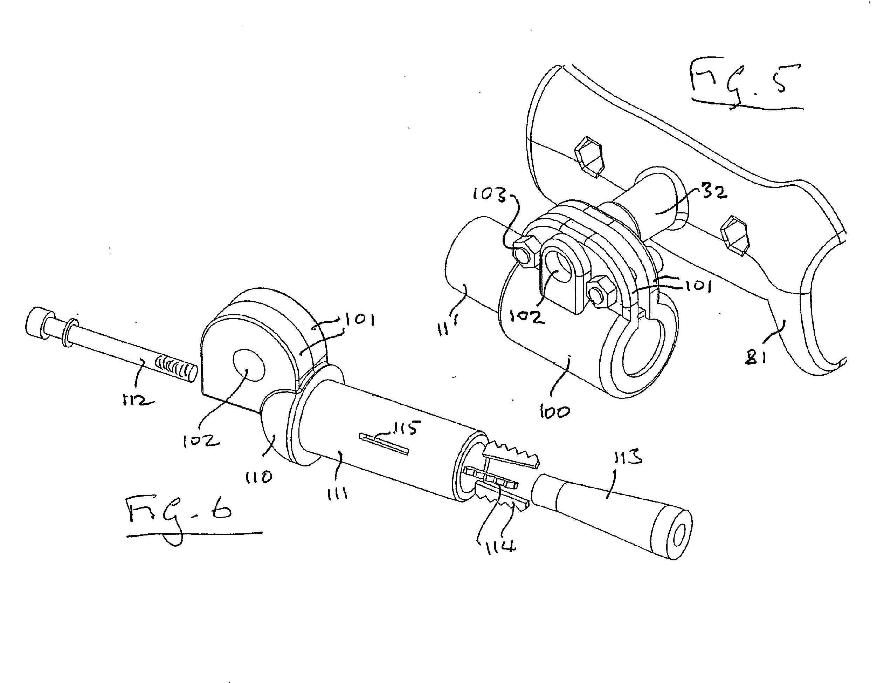

Fig. 5 shows means for attaching separate grip means of the Fig. 4 type to the handle of an existing barrow. A collar 100 has a pair of projecting lugs or ears 101, each with a hole 102, at its ends. This collar is placed around the end of the handle 11', the shaft 32 of the grip means of Fig. 4 is placed through the holes 102, and the nuts 88 and 89 tightened. The shaft 32 may be made somewhat shorter for this option. A pair of nuts and bolts 103 are provided so that the collar can be tightened on the barrow handle separately from the fixing of the shaft 32 on the collar.

Fig. 6 shows in exploded form a second means for attaching separate grip means of the Fig. 4 type to the handle of an existing barrow of the type having tubular hollow handles. A pair of lugs 101 are attached to a hemisphere 110 with a hollow cylinder 111 attached to it. A threaded bolt 112 passes through a hole in the hemisphere 110 and engages in a threaded hole through a conical element 113. A set of serrated or toothed elements 114 are mounted around the conical element 113 and project through slots 115 in the cylinder 111.

In use, the cylinder 111 is inserted into the end of a wheelbarrow handle, ands the bolt 112 is tightened. This draws the conical element 113 further into the cylinder 111, so forcing the toothed elements outwardly to grip the handle firmly. A shaft 32 of the grip means of Fig. 4 is inserted through the holes 102 of the lugs 101 to complete the assembly of the grip means. If desired, a short cylinder (not shown) can be placed around the end of the barrow handle to prevent it from being burst as the bolt 112 is tightened.

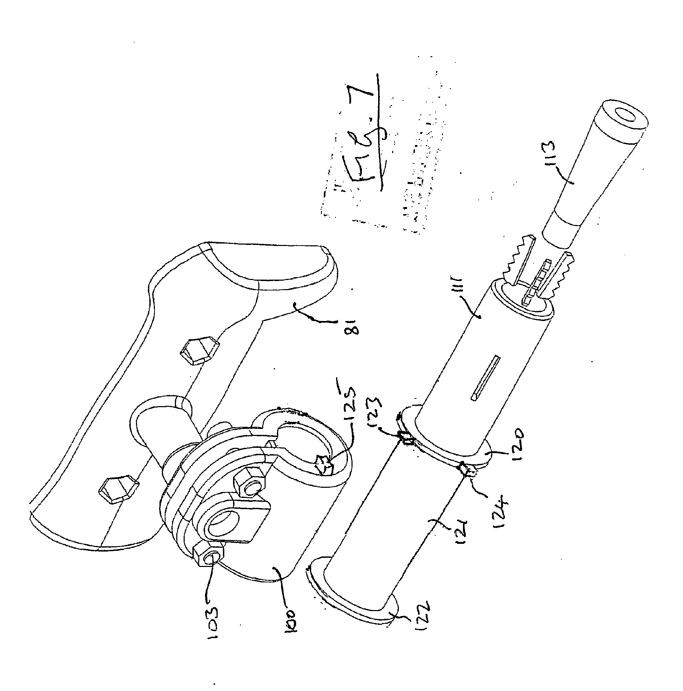

Fig. 7 shows a further means for attaching the grip means to the handles of a wheelbarrow. This combines and modifies the mechanisms of Fig. 5 and 6. In place of the hemisphere 110, there is a cylinder 121, with flanges 120 and 122 at its ends, and the collar 100 encircles this cylinder. When tightened, the nuts and bolts 103 leave the collar free to rotate around the cylinder 121. The right-hand end of the collar 100 has a projecting stop 125 which limits the rotation of the collar 100 by engaging against a pair of stops 123 and 125 on the flange 120.

The effect of this is that the holding bar 80 and 81 can drop to hang below the wheelbarrow handle, but can to raised to the horizontal position level with the handle when desired. The barrow can thus be used with the present grip means but can also be used with the normal handles for passage through narrow openings. Also, since the grip means do not project when not in use, they are less liable to suffer accidental damage.

Of course, the same technique can be applied to grip means of the Figs. 1 to 4 type which are formed integrally with the barrow.

If desired, locking means may be provided on the present grip means for locking them against rotation, so that the grip means act as conventional fixed handles. Such locking means may for example comprise a locking clip or a locking pin insertable through the rotating and fixed parts of the grip means.

The present grip means are shown as mounted on the outside of the handles. If desired, they can instead be mounted inside the handles. This may be desirable if the barrow is to be used where it has to pass through narrow doorways. However, the user's grasp of the grip means will be slightly more awkward, as the shaft 32 will have to pass between their third and fourth fingers.

It is known to provide a wheelbarrow with a brake operating on the wheel. This brake may be used to prevent the barrow from rolling when not being handled, eg on a slope; it is also useful for preventing the barrow from moving when it is being tipped up forwards for emptying. The present handles may of course be used in conjunction with such brakes. Further, such brakes can be combined with the present handles so that they operate automatically when the handles rotate significantly. This will result in the brake being applied automatically when the barrow is raised for emptying.

Although the invention is primarily applicable to wheelbarrows, it may also find application to wheelchairs, hand trucks, hand trolleys, etc, where it may be desired to change the angle of the handles, eg for manoeuvering on steep slopes or for changing between loading/unloading and moving angles.

In the claims, all references in parentheses to technical features are references within the meaning of EPC Rule 29(7), whether the reference are to individual features within specific figures or to complete figures, and are not to be taken as implying reliance on those features within the meaning of Rule 29(6).

## Claims

1. A wheelbarrow or the like having a pair of grip units (30) each capable of twisting about a generally transverse axis, each grip unit (30) being in the form of an essentially cylindrical strut (32) projecting transversely from its handle (11') and having a holding bar (33) mounted transversely on its other end, **characterised in that** the strut (32) of each grip unit (30) is passing through the handle (11') and with a screw thread (87) at that end whereby it is secured to the handle (11'), and with a head (90) at its other end which is captive within the holding bar (33).

2. A wheelbarrow or the like according to claim 1 wherein the grip unit (30) can drop below the handle (11').

3. A wheelbarrow or the like according to any previous claim wherein the holding bar (33) is a 2-part moulding (80,81) of plastics or like material.

4. A wheelbarrow or the like according to any previous claim wherein the grip units (30) are also slightly twistable (26) about the longitudinal axis (27) of the handle (11').

5. A grip unit (30) as defined in any previous claim, for use with a wheelbarrow or the like.

6. A grip unit (30) according to claim 5 wherein it is securable to the handle (11') by a collar (100) around the handle (11').

7. A grip unit (30) according to claim 6 wherein it is securable to the handle (11') by means of expandable means (114) within the handle (11').

## Patentansprüche

1. Schubkarren oder dergleichen mit einem Paar Griffstulpen (**30**), die jeweils auf einer im Wesentlichen quer verlaufende Achse drehbar angeordnet sind, wobei jede Griffstulpe (**30**) in Form einer im Wesentlich zylindrischen Strebe (**32**) ausgeführt ist, die quer aus dem zugehörigen Griff (**11'**) hervorragt und eine an ihrem anderen Ende querliegend befestigte Haltestange (**33**) aufweist, **dadurch gekennzeichnet, dass** die Strebe (**32**) jeder Griffstulpe (**30**) durch den Griff (**11'**) durchgesteckt ist, ein Schraubgewinde (**87**) an dem Ende aufweist, an dem sie an dem Griff (**11'**) befestigt ist, sowie ein Kopfstück (**90**) an ihrem anderen Ende besitzt, mit dem sie in der Haltestange (**33**) festgehalten wird.

2. Schubkarren oder dergleichen gemäß Anspruch 1, bei dem die Griffstulpe (**30**) unter den Griff (**11'**) absenkbar ist.

3. Schubkarren oder dergleichen gemäß einem beliebigen der vorhergehenden Ansprüche, bei der die Haltestange (**33**) ein zweiteiliges Spritzgussteil (**80**, **81**) aus Kunstoff ist, oder aus einem ähnlichen Werkstoff gefertigt ist.

4. Schubkarren oder dergleichen, gemäß einem beliebigen der vorhergehenden Ansprüche, bei dem die Griffstulpen (**30**) auch leicht um die Längsachse (**27**) des Griffs (**11'**) verdrehbar (**26**) sind.

5. Griffstulpe (**30**) gemäß einem beliebigen der vorhergehenden Ansprüche zur Verwendung mit einem Schubkarren oder dergleichen.

6. Griffstulpe (**30**) gemäß Anspruch 5, die mit einem um den Griff (**11'**) verlaufenden Bund (**100**) an dem Griff (**11'**) gesichert werden kann.

7. Griffstulpe (**30**) gemäß Anspruch 6, die an diesem Griff (**11'**) mit einem Spreizmittel (**114**) innerhalb des Griffs (**11'**) gesichert werden kann.

## Revendications

1. Brouette ou similaire ayant une paire d'unités de préhension (30) chacune en mesure de pivoter autour d'un axe généralement transversal, chaque unité de préhension (30) étant sous la forme d'une entretoise sensiblement cylindrique (32) faisant saillie dans le sens transversal depuis sa poignée (11') et ayant une barre de retenue (33) montée dans le sens transversal sur son autre extrémité, **caractérisée en ce que** l'entretoise (32) de chaque unité de préhension est (30) passée au travers de la poignée (11') et munie d'un filetage de vis (87) à cette extrémité ce par quoi elle est assujettie à la poignée (11') et munie d'une tête (90) à son autre extrémité qui est captive à l'intérieur de la barre de retenue (33).

2. Brouette ou similaire selon la revendication 1, dans laquelle l'unité de préhension (30) peut culbuter sous la poignée (11').

3. Brouette ou similaire selon l'une quelconque des revendications précédentes, dans laquelle la barre de retenue (33) est un moulage en deux parties (80, 81) en plastique ou matériau similaire.

4. Brouette ou similaire selon l'une quelconque des revendications précédentes, dans laquelle les unités de préhension (30) sont également légèrement pivotantes (26) autour de l'axe longitudinal (27) de la poignée (11').

5. Unité de préhension (30) définie selon l'une quelconque des revendications précédentes, à des fins d'utilisation avec une brouette ou similaire.

6. Unité de préhension (30) selon la revendication 5, dans laquelle elle est en mesure d'être assujettie à la poignée (11') par un collier (100) autour de la poignée (11').

7. Unité de préhension (30) selon la revendication 6, dans laquelle elle est en mesure d'être assujettie à la poignée (11') par le biais d'un moyen extensible (114) à l'intérieur de la poignée (11').
